Europäisches Patentamt

European Patent Office

Office européen des brevets

(19)

(11) Veröffentlichungsnummer : **0 165 230**
**B1**

# (12) EUROPÄISCHE PATENTSCHRIFT

(45) Veröffentlichungstag der Patentschrift :
19.10.88

(21) Anmeldenummer : 85890105.1

(22) Anmeldetag : 03.05.85

(51) Int. Cl.⁴ : **C 08 J 5/24**, C 08 G 59/72,
A 63 C 5/12

(54) Mit einem Epoxyharz-Härtergemisch imprägniertes flächiges Trägermaterial.

(30) Priorität : 03.05.84 AT 1476/84

(43) Veröffentlichungstag der Anmeldung :
18.12.85 Patentblatt 85/51

(45) Bekanntmachung des Hinweises auf die Patenterteilung : 19.10.88 Patentblatt 88/42

(84) Benannte Vertragsstaaten :
AT BE CH DE FR GB IT LI NL SE

(56) Entgegenhaltungen :
CH-A-   451 508
CH-A-   637 327
GB-A-   901 696
US-A- 3 067 170

(73) Patentinhaber : ISOSPORT VERBUNDBAUTEILE
Ges.m.b.H.
Industriestrasse 2
A-7000 Eisenstadt (AT)

(72) Erfinder : Steindl, Hans
Beckmanngasse 60
A-1150 Wien (AT)

(74) Vertreter : Stampfer, Heinz
ISOVOLTA Österreichische Isolierstoffwerke AG
Industriezentrum-Süd
A-2351 Wiener Neudorf (AT)

## Beschreibung

Die Erfindung betrifft ein mit einem Epoxydharz-Härtergemisch imprägniertes, aus hochfesten Fasern, insbesondere Glasfasern, Kohlenstoffasern oder dergleichen aufgebautes flächiges Trägermaterial (Prepreg), das dazu bestimmt ist — insbesondere zum Herstellen eines Skis oder von Skibauteilen — in Druckkontakt mit anderen Konstruktionsteilen heiß ausgehärtet zu werden, wobei bei der Herstellung des Prepregs ein bei Raumtemperatur festes Epoxydharz eingesetzt ist.

Bei einem bekannten, weit verbreiteten Verfahren zum Herstellen von Skiern werden die einzelnen Skibauteile in einer Form heiß verklebt. Solche Skier bestehen dabei meist im wesentlichen aus einem Skikern aus leichtem, schwingungsdämpfenden Material, wie Holz oder einem faserverstärkten Kunststoffschaum, der durch eine mechanisch tragende kastenartige Hülle umschlossen wird, welche aus einem Obergurt mit Dekoroberfläche, einem Untergurt mit Lauffläche und Stahlkanten sowie aus zwei Ober- und Untergurt miteinander verbindenden Seitenwangen besteht. Bei diesem Verfahren werden die Skibauteile, sofern sie einen duromeren Kunststoff enthalten, in bereits ausgehärtetem Zustand miteinander verklebt. Solche bereits ausgehärteten Kunststoffteile sind insbesondere die als mechanisch tragender Ober- bzw. Untergurt eingesetzten Epoxydharz-Glasfaserlaminate, die übrigens zur Verbesserung ihrer Verklebbarkeit an der Oberfläche geschliffen sind. Ein Vorteil dieses Verfahrens besteht nun darin, daß man durch entsprechende Wahl des Bindemittels bei einer relativ niedrigen Verklebetemperatur von 100 bis 120 °C arbeitet, bei der alle eingesetzten Skibauteile noch mechanisch stabil sind, also z. B. die als Skilaufflächen bzw. Skioberflächen verwendeten Thermoplaste noch nicht erweichen. Nachteile bestehen jedoch u. a. darin, daß die Anzahl der bei diesen niedrigen Temperaturen in relativ kurzer Zeit aushärtenden Bindemittel relativ klein ist, bzw. darin, daß überhaupt spezielle Bindemittelschichten benötigt werden.

Bei einem anderen Verfahren werden mit einem aushärtbaren Epoxydharz-Härtergemisch imprägnierte aus Glasfasern aufgebaute Trägermaterialien, sogenannte Prepregs, in die Form eingesetzt, die dort zu den gewünschten glasfaserverstärkten Epoxydharzschichten aushärten und sich dabei gleichzeitig mit den benachbarten Skibauteilen verbinden. Die für eine solche Verwendung in den Prepregs bekannten Epoxydharz-Härtersysteme benötigen jedoch Aushärtetemperaturen von mindestens etwa 140 °C, wodurch viele sonst übliche preiswerte Thermoplaste, die bei solchen Temperaturen mechanisch nicht mehr stabil sind, nicht mehr als Skibauteile verwendet werden können und statt dessen andere, meist teuere Materialien zum Einsatz gelangen müssen. Ein weiterer Nachteil besteht darin, daß diese Prepregs bei Raumtemperatur nur wenige Tage lagerfähig sind, was dazu geführt hat, daß die Prepregs zwischen ihrer Herstellung und Verwendung in Kühlräumen und Kühlbehältern z. B. bei —10 °C gelagert bzw. transportiert werden, wodurch man die zulässige Lagerdauer auf etwa 30 Tage erhöhen kann und es so möglich macht, daß die Prepregs vom Hersteller zur Weiterverarbeitung an eine andere Betriebsstätte, insbesondere also an den Skihersteller geliefert werden können.

Ein Verfahren zur Herstellung eines Epoxydharzprepregs der eingangs der Beschreibung genannten Art mit hoher Lagerstabilität bei Raumtemperatur ist nun aus der CH-PS 451 508 bekannt. Bei diesem Verfahren wird gegebenenfalls ein bei Raumtemperatur festes und in den gebräuchlichen Lösungsmitteln noch lösbares Epoxydharz eingesetzt. Dieses Epoxydharz ist bereits ein vorreagiertes Produkt, zu dessen Herstellung das Ausgangs-Epoxydharz mit einer geringen Härtermenge reagiert, wobei ein Teil der reaktiven Gruppen des Ausgangsmaterials abgesättigt und die Härtungsreaktion durch vollständigen Verbrauch des eingesetzten Härters unterbrochen wird. Die vorgesehenen Aushärtetemperaturen liegen aber auch hier relativ hoch und zwar — wie in den Beispielen angegeben — bei 160 bzw. bei 180 °C.

Der Erfindung liegt nun die Aufgabe zugrunde, ein mit einem Epoxydharz-Härtergemisch imprägniertes flächiges Trägermaterial der eingangs genannten Art anzugeben, das dazu bestimmt ist, insbesondere zum Herstellen eines Skis oder von Skibauteilen, in Druckkontakt mit anderen Konstruktionsteilen heiß ausgehärtet zu werden, und welches bei Raumtemperatur länger als 30 Tage lagerfähig ist und bei Temperaturen von 120 °C und weniger in relativ kurzer Zeit ausgehärtet werden kann.

Die der Erfindung zugrundeliegende Aufgabe wird in dem erfindungsgemäßen mit einem Epoxydharz-Härtergemisch imprägnierten flächigen Trägermaterial gelöst, das dadurch gekennzeichnet ist, daß für eine vorgesehene Aushärtetemperatur von weniger als 120 °C, insbesondere aber für eine Aushärtetemperatur zwischen 90 und 120 °C das eingesetzte Epoxydharz einen Schmelzbereich aufweist, dessen untere Grenztemperatur höher als 45° ist und dessen obere Grenztemperatur um mindestens 20 °C niedriger ist als die vorgesehene Aushärtetemperatur, und daß der Härter ein latenter Härter ist, der eine Aktivierungstemperatur im Bereich zwischen 35 und 80 °C, insbesondere jedoch im Bereich zwischen 45 und 60 °C aufweist. Dabei ist der eingesetzte latente Härter vorteilhaft einer auf Basis eines $BF_3$-Komplexes, vorzugsweise eines $BF_3$-Aminokomplexes.

Die Herstellung von flächigen, aushärtbaren Gebilden, für die Aushärtetemperaturen von weniger als 120 °C, z. B. von 110 °C vorgesehen sind, wird zwar auch in der AT-PS 362 150 beschrieben. Es handelt sich hier aber um die Herstellung von mit Epoxydharz-Härtergemischen beschichteten Substrater, bei welcher das Beschichtungsmaterial in Pulverform auf das Substrat aufgebracht, kurzzeitig erwärmt und wieder abgekühlt wird. Bei der Herstellung des erfindungsgemäßen Prepregs wird hingegen von der Viel einfacheren üblichen Imprägniertechnik Gebrauch gemacht.

Die Herstellung des Prepregs erfolgt in der Praxis vorzugsweise in kontinuierlicher Weise dadurch, daß man eine endlose Trägermaterialbahn durch eine Imprägnierwanne führt, in welcher als Imprägniermittel eine Lösung des einzusetzenden Epoxydharz-Härtergemisches vorgelegt ist. Die mit diesem Imprägniermittel getränkte Trägermaterialbahn durchläuft dann zunächst zwecks Steuerung des Imprägniermittelauftrages ein Abquetschwalzenpaar und danach eine beheizte Trockenstrecke, in der das Lösungsmittel der Epoxydharz-Härtergemisch-Lösung abgedampft wird, wobei das Epoxydharz-Härtergemisch in fester Form als Matrixmaterial zwischen und an den Fasern des Trägermaterials zurückbleibt. Dabei ist es wichtig, daß die Trocknung der getränkten Trägermaterialbahn so geführt wird, daß dabei die Aktivierungstemperatur des latenten Härters nicht erreicht oder höchstens nur für kurze Zeit überschritten wird, um so zu verhindern, daß die Härtungsreaktion des Epoxydharz-Härtergemisches während des Trocknungsvorganges anspringt.

Die Anmelderin hat nun gefunden, daß die Lagerfähigkeit des erfindungsgemäßen Prepregs gegenüber bekannten Prepregs verbessert ist. Dabei wird die Lagerfähigkeit durch jene Zeit ab Prepreg-Erzeugung gekennzeichnet, nach der das Anlaminieren des Prepreg an ein Substrat bei der Aushärtetemperatur noch eine Verbindung ergibt, bei welcher gegenüber einer mit einem frisch hergestellten Prepreg erzeugten Anlaminierung das nach DIN 53 295 bestimmte spezifische Schälmoment noch nicht merklich abgesunken ist.

Die Erfindung wird nachstehend anhand von Beispielen näher erläutert.

### Beispiel 1

100 g eines Epoxydharzes vom Typ des epoxydierten 4,4' Dihydroxydiphenylpropan mit einem Epoxydäquivalentgewicht von 450 g und einem Schmelzbereich von 60 bis 65 °C wurden in 80 g Aceton gelöst und diese Lösung mit 5 g eines flüssigen Härters auf Basis eines $BF_3$-Aminokomplexes, der eine Aktivierungstemperatur von 50 °C aufweist, versetzt. Mit dieser Lösung wurde ein Glasseidengewebe mit einem Flächengewicht von 500 g/m² imprägniert und das Lösungsmittel bei 50 °C während 15 min im Luftstrom fast vollständig entfernt, wodurch ein Glasgewebeprepreg mit einem Glasanteil von 60 Gew.% und einer Dicke von etwa 0,6 mm entstand.

Zur Feststellung seiner Gebrauchstüchtigkeit wurde dieses Prepreg zwischen einem gebeizten Duraluminiumblech mit einer Dicke von 1,5 mm und einer 1,2 mm dicken, verklebeseitig geschliffenen und beflammten Polyäthylenfolie, wie sie üblicherweise als Skilauffläche verwendet wird, eingelegt und das Ganze bei einer Temperatur von 110 °C und einem Druck von 100 N/cm² während 10 min zu einem Verbundteil verpreßt, wobei das Prepreg zu einem Laminat aushärtete und mit dem anliegenden Duraluminiumblech bzw. der Polyäthylenfolie eine Verbindung einging.

Schälversuche nach DIN 53 295 an diesem Verbundteil ergaben für die Verbindung Duraluminium-Laminat und Polyäthylen-Laminat spezifische Schälmomente von 164 Nmm/mm bzw. 311 Nmm/mm. Diese Schälmomentwerte wurden sowohl bei Einsatz eines frisch imprägnierten Prepregs als auch bei einem Prepreg derselben Art erzielt, das bereits während 10 Wochen bei einer Raumtemperatur zwischen 15 und 20 °C gelagert war. Erst beim Einsatz von noch länger gelagerten Prepregs trat ein Abfall der Schälmomentwerte ein.

### Beispiel 2

100 g eines festen Bisphenol A-Epichlorhydrin Epoxydharzes mit einem Epoxydäquivalentgewicht von 550 g und einem Schmelzbereich von 65 bis 70 °C wurden in 90 g Methyläthylketon gelöst und dieser Lösung 6 g eines Härters auf Basis eines $BF_3$-Komplexes, der eine Aktivierungstemperatur von 65 °C aufweist, zugefügt. Mit dieser Lösung wurde ein Glasrovinggelege mit einem Flächengewicht von 800 g/m² imprägniert und das Lösungsmittel bei 50 °C während 15 min im Luftstrom fast vollständig entfernt. Das so hergestellte Prepreg wies einen Glasgehalt von 62 Gew.% und eine Dicke von etwa 1,0 mm auf. Nach Lagerung des Prepregs bei einer Raumtemperatur zwischen 15 und 20 °C während 10 Wochen wurde es in ähnlicher Weise wie in Beispiel 1 beschrieben in einem Verbundteil zu einem Laminat ausgehärtet. An diesem Verbundteil angestellte Schälversuche ergaben zufriedenstellende Schälmomentwerte.

### Beispiel 3

100 g eines Epoxydharzes vom Typ des Diglycidäthers von Bisphenol A mit einem Epoxydäquivalentgewicht von 550 g und einem Schmelzbereich von 65 bis 70 °C wurden in 100 g eines Lösungsmittelgemisches, bestehend aus Xylol, Methylisobutylketon und Methylenchlorid, gelöst und diese Lösung mit 5 g eines cycloaliphatischen Epoxydharzes und 6 g eines $BF_3$-Aminokomplex-Härters, der eine Aktivierungstemperatur von 60 °C aufweist, versetzt. Mit dieser Lösung wurde dann eine Glasmatte mit einem Flächengewicht von 500 g/m² imprägniert und bei 50 °C während 30 min auf einen geringen Lösungsmittelrest getrocknet. Das so hergestellte Prepreg wies einen Glasgehalt von 45 Gew.% und eine Dicke von etwa 1 mm auf.

Zur Feststellung der Lagerfähigkeit wurde das Prepreg bei einer Raumtemperatur zwischen 17 und 22 °C 2 Monate gelagert und darauf — analog wie in Beispiel 1 beschrieben — aus einem gebeizten Duraluminiumblech einer Dicke von 1,5 mm, dem Prepreg und einer 1,0 mm dicken und so wie gemäß Beispiel 1 vorbehandelten Polyäthylenfolie durch Verpressen bei einer Temperatur von 110 °C, einem Druck von 100 N/cm² und einer Preßzeit von 10 min unter Aushärtung des Prepregs zu einem Laminat ein Verbundteil hergestellt.

Schälversuche nach DIN 53 295 an diesem Verbundteil ergaben für die Verbindungen Duraluminium-Laminat und Polyäthylen-Laminat spezifische Schälmomente von 238 Nmm/mm bzw. 255 Nmm/mm.

**Patentansprüche**

1. Mit einem Epoxydharz-Härtergemisch imprägniertes, aus hochfesten Fasern, insbesondere Glasfasern, Kohlenstoffasern oder dergleichen aufgebautes flächiges Trägermaterial (Prepreg), das dazu bestimmt ist, insbesondere zum Herstellen eines Skis oder von Skibauteilen, im Druckkontakt mit anderen Konstruktionsteilen heiß ausgehärtet zu werden, wobei bei der Herstellung des Prepregs ein bei Raumtemperatur festes Epoxydharz eingesetzt ist, dadurch gekennzeichnet, daß für eine vorgesehene Aushärtetemperatur von weniger als 120 °C, insbesondere aber für eine Aushärtetemperatur zwischen 90 und 120 °C, das eingesetzte Epoxydharz einen Schmelzbereich aufweist, dessen untere Grenztemperatur höher als 45 °C ist und dessen obere Grenztemperatur um mindestens 20 °C niedriger ist als die vorgesehene Aushärtetemperatur, und daß der Härter ein latenter Härter ist, der eine Aktivierungstemperatur im Bereich zwischen 35 und 80 °C, insbesondere jedoch im Bereich zwischen 45 und 60 °C aufweist.

2. Imprägniertes Trägermaterial nach Anspruch 1, dadurch gekennzeichnet, daß der eingesetzte latente Härter einer auf Basis eines BF₃-Komplexes ist.

3. Imprägniertes Trägermaterial nach Anspruch 2, dadurch gekennzeichnet, daß der eingesetzte latente Härter einer auf Basis eines BF₃-Aminokomplexes ist.

**Claims**

1. Sheet carrier material (prepreg) impregnated with an epoxy resin hardener mixture and constructed with high-strength fibres, in particular glass fibres, carbon fibres or the like, which is intended to be hardened using heat in pressure contact with other construction elements, in particular for the manufacture of a ski or of ski components, an epoxy resin which is solid at room temperature being used in the manufacture of the prepreg, characterised in that for an intended hardening temperature of less than 120 °C, but particularly for a hardening temperature of between 90 and 120 °C, the epoxy resin used has a melting range, the lower limit temperature of which is higher than 45 °C and the upper limit temperature of which is at least 20 °C lower than the intended hardening temperature, and that the hardener is a latent hardener which has an activation temperature in the region of between 35 and 80 °C, but in particular in the region of between 45 and 60 °C.

2. Impregnated carrier material according to Claim 1, characterised in that the latent hardener used is one based on a BF₃ complex.

3. Impregnated carrier material according to Claim 2, characterised in that the latent hardener used is one based on a BF₃ amino complex.

**Revendications**

1. Matériau de support dit « prepreg » imprégné d'un mélange de résine époxy et de durcisseur, et formé de fibres à forte résistance, notamment de fibres de verre, fibres de carbone ou analogues, destiné notamment à être utilisé dans la fabrication d'un ski ou d'éléments de ski et à être durci à chaud, à cet effet, sous pression et en contact avec d'autres éléments de construction, procédé dans lequel on utilise, pour préparer le Prepreg, une résine époxy qui est solide à température ambiante normale, caractérisé en ce que, pour une température de durcissement choisie, inférieure à 120 °C, et plus particulièrement pour une température de durcissement comprise entre 90 °C et 120 °C, la résine époxy utilisée présente une plage de température de fusion dont la limite inférieure est supérieure à 45 °C et dont la limite supérieure est inférieure d'au moins 20 °C à la température de durcissement choisie, et en ce que le durcisseur est un durcisseur latent dont la température d'activation est comprise entre 35 °C et 80 °C, et notamment entre 45 °C et 60 °C.

2. Matériau de support imprégné selon la revendication 1, caractérisé en ce que le durcisseur latent utilisé est un durcisseur à base d'un complexe BF₃.

3. Matériau de support imprégné selon la revendication 2, caractérisé en ce que le durcisseur latent utilisé est un durcisseur à base d'un complexe amino-BF₃.